**Europäisches Patentamt**

**European Patent Office**

**Office européen des brevets**

(19)

(11) Veröffentlichungsnummer : **0 340 547 B1**

# EUROPÄISCHE PATENTSCHRIFT

(12)

(45) Veröffentlichungstag der Patentschrift :
**04.03.92 Patentblatt 92/10**

(51) Int. Cl.$^5$ : **C22B 58/00,** C22B 3/00,
C01G 15/00

(21) Anmeldenummer : **89107104.5**

(22) Anmeldetag : **20.04.89**

(54) **Verfahren zur Gewinnung von Gallium.**

Die Akte enthält technische Angaben, die nach dem Eingang der Anmeldung eingereicht wurden und die nicht in dieser Patentschrift enthalten sind.

(30) Priorität : **03.05.88 DE 3814916**

(43) Veröffentlichungstag der Anmeldung :
**08.11.89 Patentblatt 89/45**

(45) Bekanntmachung des Hinweises auf die Patenterteilung :
**04.03.92 Patentblatt 92/10**

(84) Benannte Vertragsstaaten :
**DE ES FR GB GR IT**

(56) Entgegenhaltungen :
**EP-A- 0 258 146
EP-A- 0 265 356
EP-A- 0 297 998
FR-A- 1 297 623
US-A- 4 631 177
PATENT ABSTRACTS OF JAPAN, Band 9, Nr. 78 (C-274)[1801], 6. April 1985; & JP-A-59 213 622 (SHIYOUWA KEIKINZOKU K.K.) 03-12-1984**

(73) Patentinhaber : **BAYER AG
W-5090 Leverkusen 1 Bayerwerk (DE)**
Patentinhaber : **INGAL INTERNATIONAL GALLIUM GMBH
P.O. Box 1860
W-8460 Schwandorf 1 (DE)**

(72) Erfinder : **Mitschker, Alfred, Dr.
Am Gartenfeld 50
W-5068 Odenthal-Holz (DE)**
Erfinder : **Lange, Peter Michael, Dr.
Walter-Flex-Strasse 9
W-5090 Leverkusen (DE)**
Erfinder : **Hoffmann, Heiko
Heitberg 6
W-5060 Bergisch-Gladbach 1 (DE)**
Erfinder : **Lossmann, Günter, Dr.
Heinrich-Bursch-Strasse 13
W-5300 Bonn 1 (DE)**
Erfinder : **Van der Meer, Andries Piet, Dr.
De La Reystraat 4
NL-6814 Arnhem (NL)**
Erfinder : **Smit, Cornelius Jacobus
Schaapsdrift 138
NL-6902 Am Zevenaar (NL)**

## Beschreibung

Die Erfindung betrifft ein neues, verbessertes Verfahren zur Gewinnung von Gallium aus wäßrigen Lösungen durch Adsorption an mit Kelex® 100 (Ashland Chemical Co.) (Wirkstoff: 7-(4-Ethyl-1-methyloctyl)-8-hydroxy-chinolin) getränkten synthetischen Harzen.

Aus der US-PS 4 631 177 und den Europäischen Anmeldungen 234 319, 258 146 und 265 356 ist bekannt, Gallium selektiv aus wäßrigen alkalischen Lösungen dadurch zu gewinnen, daß man die Gallium enthaltenden Lösungen über in einem Filterrohr (Kolonne) angeordnete perlpolymerisierte synthetische Harze filtriert, die mit Kelex® 100 getränkt wurden und anschließend durch Behandeln des mit Gallium beladenen Harzes mit wäßrigen Säuren das Gallium vom Harz eluiert.

Gemäß den Angaben in den EP-A 258 146 und 265 356 sind die in der US-PS 4 631 177 und der EP-A 234 319 beschriebenen Verfahren für eine Anwendung in technischem Maßstab nicht geeignet, weil in ihnen mit Kelex® 100 getränkte Harze verwendet werden, die nur 0,1 bis 0,6 g Kelex®/g Harz enthalten und deshalb eine für eine praktische Anwendung zu geringe Kapazität aufweisen. Zur Verbesserung der in der US-PS 4 631 177 und EP-A 234 319 beschriebenen Verfahren wird deshalb in den EP-A 258 146 und 265 356 vorgeschlagen, die Trägerharze mit wesentlich größeren Kelex®-Mengen, nämlich 250 bis 350 g Kelex®/l Harz (trocken) zu beladen und - gemäß EP-A 265 356 - ein für die Aufnahme dieser hohen Kelex®-Mengen besonders geeignetes Harz zu verwenden. Diese mit 250 bis 350 g Kelex®/l Harz beladenen Adsorptionsmittel haben jedoch den Nachteil, daß sie nur noch eine unzureichende Selektivität aufweisen; sie nehmen im Verhältnis zu Gallium zu viel Aluminium auf. Der durch die herabgesetzte Selektivität bedingte Mehrverbrauch an Säure für die Elution und die mit der Aufarbeitung der Aluminium enthaltenden Elutionslösungen verbundenen Kosten setzen die Wirtschaftlichkeit des Verfahrens sehr stark herab.

Die vorbeschriebenen Verfahren weisen ferner den Nachteil auf, daß bei Verwendung Gallium-haltiger Aluminatlaugen, wie sie bei der Aluminiumoxid-Herstellung nach dem Bayer-Verfahren anfallen, d.h. von Aluminatlaugen mit einem relativ hohen Gehalt an organischen Verbindungen, schon beim Arbeiten in halbtechnischem Maßstab der Druck in der Adsorptionskolonne bereits nach wenigen Arbeitszyklen viel zu stark ansteigt und die Aufnahmefähigkeit des Harzes für Gallium so stark absinkt, daß das Verfahren abgebrochen und, da ein Rückspülen des Harzbettes nur zu einer unerheblichen Abnahme des Druckes und zu keiner Verbesserung des Adsorptionsvermögens des Harzes führt, das Harz aus der Kolonne entfernt werden muß.

Es wurde nun gefunden, daß man zu einem in technischem Maßstab wirtschaftlich durchführbaren Verfahren zur Gewinnung von Gallium aus wäßrig-alkalischen Lösungen, insbesondere nach dem Bayer-Verfahren anfallenden Aluminatlaugen, gelangt, wenn man als Trägermaterial einen speziellen Typ makroporöser Perlpolymerisate verwendet, diesen nur mit einer bestimmten beschränkten Kelex®-Menge, nämlich 160 bis 190 g Kelex® 100/l Harz (trocken) belädt und nach der Elution des Galliums aus dem Harz nicht unmittelbar mit dem Beladungsschritt beginnt, sondern zunächst die Säure durch Waschen des Harzes mit Wasser aus dem Harzbett verdrängt und anschließend das Harz mit wäßriger Natronlauge-Lösung wäscht und erst dann den Arbeitszyklus wieder mit dem Beladungsschritt beginnt.

Es wurde gefunden, daß die speziellen Trägerharze bei einer Beladung mit nur 160-190 g Kelex® 100/l Harz ein Selektivitätsmaximum aufweisen und trotz der Beladung mit wesentlich kleineren Kelex®-Mengen als gemäß Stand der Technik empfohlen, trotzdem eine für die Anwendung des Verfahrens in technischem Maßstab voll ausreichende Kapazität für Gallium besitzen.

Durch die Einführung der Harzwäsche mit Natronlauge nach dem Elutionsschritt wird überraschenderweise erreicht, daß auch nach über 150 Arbeitszyklen noch kein Druckanstieg in der Kolonne erfolgt und das Adsorptionsvermögen der Harze für Gallium praktisch unverändert erhalten bleibt.

In den in den EP-A 234 319, 258 146 und 265 356 und der US-PS 4 631 177 beschriebenen Verfahren werden die eluierten und mit Wasser gewaschenen Harze vor ihrer erneuten Beladung mit Aluminatlauge nicht mit Natronlauge gewaschen. In Beispiel 1 der US-PS 4 631 177 wird das ungebrauchte Harz vor Beginn des 10-maligen Adsorptions-Elutions-Vorganges durch eine Behandlung mit Natronlauge konditioniert; diese Konditionierung hat jedoch mit der erfindungsgemäßen Wäsche des eluierten und mit Wasser ausgewaschenen Harzes nichts gemein, da sie nur einmal, nämlich vor Beginn der Arbeitsspiele vorgenommen wird und nicht, wie die erfindungsgemäße Wäsche mit Natronlauge, regelmäßig nach jedem Elutionsschritt. Durch die Konditionierung vor Beginn der Arbeitsspiele läßt sich der Druckanstieg in der Kolonne während der Arbeitsspiele nicht vermeiden.

In den vorbeschriebenen Verfahren zur Adsorption von Gallium aus Aluminatlaugen werden die als Träger für Kelex® 100 zu verwendenden makroporösen Harze durch ihr Porenvolumen und ihre Porenoberfläche charakterisiert. Erfindungsgemäß wurde gefunden, daß nicht diese Parameter sondern eine bestimmte Porenstruktur ausschlaggebend für Selektivität und Kapazität der Harze sind. Porenvolumen und Porenoberfläche sagen über die Porenstruktur nichts aus. Bei gegebenen Monomergemischen wird deren Porenstruktur durch das verwendete Porogen bestimmt. Erfindungsgemäß wurde gefunden, daß die Porenstruktur, die bei der Polymerisation von Divinylbenzol oder mindestens 50 Gew.-% Divinylbenzol enthaltender Gemische von aromatischen Mono-, Di- und/oder Trivinylbenzolen bei Verwendung von Methyl-$C_2$-$C_6$-alkylketonen, insbesondere von Methylisobutylketon, als Porogen erhalten wird, die hohe Selektivität und Kapazität für die gebundenen Galliumionen bedingt.

Die Erfindung betrifft daher ein Verfahren zur Gewinnung von Gallium aus wäßrigen alkalischen Lösungen durch Adsorption an mit Kelex® 100 getränkten perlpolymerisierten synthetischen Harzen und Elution des Galliums mit wäßrigen Säuren, das dadurch gekennzeichnet ist, daß man als synthetische Harze makroporöses Polydivinylbenzol oder makroporöse Divinylbenzol-Copolymerisate verwendet, die durch Perlpolymerisation von Divinylbenzol oder mindestens 50 Gew.-% Divinylbenzol enthaltenden Gemischen aromatischer Mono-, Di- und/oder Trivinylbenzole in Gegenwart von Methyl-$C_2$-$C_6$-alkyl-ketonen, insbesondere von Methylisobutylketon erhalten wurden, diese speziellen Perlpolymerisate mit 160 bis 190 g, vorzugsweise 160 bis 180 g Kelex® 100/l Harz (trocken) tränkt und nach der Elution des Galliums mit wäßrigen Säuren zunächst die Säure durch Waschen mit Wasser aus dem Harzbett verdrängt, dann das Harz mit wäßriger Natronlauge-Lösung wäscht und erst dann den nächsten Arbeitszyklus mit dem Beladungsschritt beginnt.

Als Methyl-$C_2$-$C_6$-alkyl-ketone seien vor allem Methylethylketon, Methyl-i.-propylketon, Methyl-tert.-butylketon und Methyl-i.-pentylketon genannt, vorzugsweise wird Methylisobutylketon verwendet.

Die Perlpolymerisation des Divinylbenzols bzw. der mindestens 50 Gew.-% Divinylbenzol, bezogen auf das Gesamtgewicht der polymerisierbaren Monomere, enthaltenden Gemische aromatischer Mono-, Di- und/oder Trivinylbenzole in Gegenwart der Methyl-$C_2$-$C_6$-alkylketone wird in der für die Herstellung von makroporösen Perlpolymerisaten an sich bekannten Weise vorgenommen. Divinylbenzol oder mindestens 50 Gew.-% Divinylbenzol enthaltende Gemische aromatischer Mono-, Di- und/oder Trivinylbenzole werden mit dem vorgesehenen Methyl-$C_2$-$C_6$-alkylketon, vorzugsweise Methylisobutylketon, und üblichen Radikalbildnern, wie Benzoylperoxid oder Azoisobuttersäuredinitril, in einer 0,1 bis 0,3 Gew.-% Stabilisatoren, z.B. Ethylzellulose, Tylose usw., enthaltenden wäßrigen Lösung unter Rühren suspendiert. Die Suspension wird unter Rühren auf Temperaturen von 60 bis 100° C erwärmt und solange bei dieser Temperatur gerührt, bis die Polymerisationsreaktion beendet ist. Nach dem Abkühlen auf Raumtemperatur wird das Perlpolymerisat mechanisch abgetrennt und durch Eluieren mit Alkoholen, vorzugsweise Methanol, vom eingeschlossen Methyl-$C_2$-$C_6$-alkylketon befreit.

Die Methyl-$C_2$-$C_6$-alkylketone werden vorzugsweise in einer Menge von 100 bis 300 Gew.-%, bezogen auf das Gesamtgewicht der zu polymerisierenden Monomere angewendet.

Als mindestens 50 Gew.-% Divinylbenzol, bezogen auf das Gesamtgewicht der polymerisierbaren Monomere, enthaltende Gemische aromatischer Mono-, Di- und/oder Trivinylbenzole kommen vor allem die als technisches Divinylbenzol angebotenen Gemische in Betracht. Diese handelsüblichen technischen Divinylbenzole enthalten außer den isomeren Divinylbenzolen, Ethylstyrole und Trivinylbenzole. Der Gehalt der technischen Divinylbenzole beträgt 50 bis 100 Gew.-%, vorzugsweise 60 bis 80 Gew.-% Divinylbenzole, bezogen auf das Gesamtgewicht der Monomere. Der Rest bis 100 Gew.-%, nämlich 50 bis 0 Gew.-%, vorzugsweise 40 bis 20 Gew.-% besteht aus Ethylstyrolen und/oder Trivinylbenzolen.

Einige typische Zusammensetzungen technischer Divinylbenzole sind z.B.:
(Bei der Beschreibung der Zusammensetzung wurden nur die polymerisierbaren Verbindungen berücksichtigt; die nicht polymerisierbaren Verbindungen, ihre Gesamtmenge im technischen Divinylbenzol beträgt bis zu etwa 2 Gew.-%, wurden nicht angegeben.)

a) 64 Gew.-% Divinylbenzole
36 Gew.-% Ethylstyrole

b) 80,1 Gew.-% Divinylbenzole
19,9 Gew.-% Ethylstyrole

c) 58 Gew.-% Ethyl-Divinylbenzole
18 Gew.-% Di-Ethylstyrole
24 Gew.-% Trivinylbenzole

Für die Adsorption von Gallium aus wäßrig-alkalischen Lösungen werden die erfindungsgemäß als Träger für Kelex® 100 zu verwendenden makroporösen Polydivinylbenzol-Harze durch Behandeln, z.B. 30 bis 60 minütiges Verrühren mit den Kelex® 100-Lösungen in Alkoholen, z.B. Ethanol, mit einer solchen Kelex® 100 Menge getränkt, daß die Beladung der Harze 160-190 g, vorzugsweise 160-180 g Kelex® 100/l Harz (trocken) beträgt.

Nach der Adsorption wird das Gallium durch Behandeln der beladenen Harze mit wäßrigen Säuren praktisch quantitativ eluiert. Als wäßrige Säuren können auch die Gallium enthaltenden sauren Eluate vom vorherigen Arbeitszyklus eingesetzt werden. Die Verwendung der sauren Eluate als Elutionsmittel hat den Vorteil,

EP 0 340 547 B1

daß Eluate mit höheren Gallium-Konzentrationen erhalten werden.

Das erfindungsgemäße Verfahren kann im Prinzip wie folgt durchgeführt werden:

Das erfindungsgemäß zu verwendende, mit Kelex® 100 getränkte Harz wird in eine Kolonne gefüllt; über das Harzbett wird solange Gallium-haltige Aluminatlauge geleitet (Fließrichtung: von oben nach unten), bis die Kapazität des Harzes erschöpft ist, d.h. die Galliumkonzentration in der aus dem Filter abfließenden Aluminatlauge auf den als Durchbruchspunkt gewählten Wert angestiegen ist.

Bei der Aluminiumoxid-Herstellung nach dem Bayer-Verfahren fallen die Gallium-haltigen Aluminatlaugen mit einer Temperatur von 50-80° C an. Vorteilhaft leitet man sie unmittelbar, d.h. ohne vorherige Abkühlung, über das Harzbett.

Nach dem Beladungsvorgang wird das Harzbett im Gegenstrom mit Wasser gewaschen, bis der pH-Wert des ablaufenden Waschwassers von anfänglich >13 auf 11-9 gesunken ist. Anschließend wird das Gallium durch Behandeln des beladenen und gewaschenen Harzes mit 15-30 gew.-%iger wäßriger Mineralsäure, vorzugsweise wäßriger Schwefelsäure, eluiert.

Dann wird das Harzbett mit einer solchen Menge Wasser gewaschen, bis der pH-Wert des ablaufenden Waschwassers von anfänglich <1 auf etwa 2 angestiegen ist. Anschließend wird das Harzbett durch Behandeln mit 0,1-5 gew.-%iger, vorzugsweise 0,2-2 gew.-%iger, wäßriger Natronlauge gereinigt; im allgemeinen sind für diese Reinigung 0,5 bis 20, vorzugsweise 0,5 bis 10 Bettvolumina Natronlauge erforderlich.

Die lineare Strömungsgeschwindigkeit der wäßrigen Lösungen durch die Kolonne ist dabei keine kritische Größe. Sie beeinflußt aber den Grad der Lösungsnutzung und den Druckverlust. Je feiner das Harzkorn, desto größer wird der Druckverlust bei vorgegebener Kolonnenabmessung sein.

Beispiel 1

a) 360 g (= 1,552 l) eines der Trägerharze, deren Herstellung nachstehend unter (cα) und (cβ) beschrieben ist, werden in die Lösung von 257 g Kelex® 100 [Wirkstoff: 4-Ethyl-1-methyloctyl)-8-hydroxy-chinolin] in 820 g Ethanol eingetragen und 30 Minuten bei Raumtemperatur in dieser Lösung gerührt. Anschließend wird das Ethanol unter Rühren im Vakuum abdestilliert. Das mit Kelex® 100 beladene alkoholfeuchte Harz wird abschließend im Vakuum bei 70° C getrocknet.

Es werden 1,55 l mit 257 g Kelex® 100 getränktes Harz erhalten.

b) 199 g dieses getränkten Harzes werden in ein Filterrohr (innerer Durchmesser: 70 mm; Harzbetthöhe ungefähr 13 cm) gefüllt. Durch das Harzbett wird von oben nach unten eine alkalische, Gallium haltige Aluminatlösung aus der Aluminiumoxid-Herstellung nach dem Bayer-Verfahren mit einer linearen Strömungsgeschwindigkeit von 21 m/h geleitet.

Temperatur der Aluminatlösung: 60° C;

Zusammensetzung der Aluminatlösung:

140 g $Na_2O$/l

80 g $Al_2O_3$/l

30 g organisch gebundener Kohlenstoff/l

150 mg Gallium/l

Nach Durchsatz von 20 Bettvolumen Aluminatlauge ist die Kapazität des Harzes für Gallium erschöpft (Galliumaufnahme bis zum gewählten Durchbruchspunkt: 2,5 g/l Harz). Das Harz wird im Gegenstrom mit Wasser gewaschen, bis der pH-Wert des ablaufenden Waschwassers auf 10,5 abgefallen ist (erforderliche Wassermenge: ~ 25 BV). Zur Elution des Galliums werden durch das Filter 1,5 l 4n wäßrige $H_2SO_4$ geleitet (spezifische Belastung: 5 BV/h; Strömungsrichtung: von oben nach unten). Um die Säure aus dem Harzbett zu verdrängen, wird dieses mit 1 BV Wasser gespült (pH-Wert des zuletzt ablaufenden Wassers: ~ 2); anschließend wird das Harzbett durch Überleiten von 1 BV 0,5 gew.-%iger NaOH gereinigt. Nach erfolgter Reinigung beginnt der nächste Beladungsschritt.

c) Die als Träger für das Kelex® 100 verwendeten Harze waren wie folgt erhalten worden:

α) Eine Mischung aus 600 g technischem Divinylbenzol (Zusammensetzung: 64 Gew.-% Divinylbenzole; 36 Gew.-% Ethylstyrole), 900 g Methylisobutylketon und 6 g Benzoylperoxid wird unter Rühren in einer wäßrigen Lösung von 6 g Tylose in 3000 g entsalztem Wasser dispergiert; nach 1-stündigem Rühren bei Raumtemperatur wird das Polymerisationsgemisch unter Rühren auf 70° C erwärmt und 15 Stunden bei dieser Temperatur gerührt. Nach einer 2-stündigen Aushärtphase bei 90° C wird das entstandene Perl polymerisat abgesaugt und mit entsalztem Wasser gewaschen. Zum Entfernen des eingeschlossenen Methylisobutylketons wird das Perlpolymerisat in einer Säule mit Methanol eluiert. Abschließend wird das Perlpolymerisat im Vakuum bei 40° C getrocknet.

Es werden 540 g Polymerisat erhalten.

ß) Eine Mischung aus 600 g technischem Divinylbenzol (Zusammensetzung: 80,1 Gew.-% Divinylbenzole;

19,9 Gew.-% Ethylstyrole), 1800 g Methylisobutylketon und 6 g Benzoylperoxid wird unter Rühren in einer Lösung von 9 g Ethylzellulose in 4500 g entsalztem Wasser dispergiert. Die Weiterverarbeitung des Polymerisationsansatzes erfolgte wir vorstehend unter (c) beschrieben.

Es wurden 530 g Harz erhalten.

## Patentansprüche

1. Verfahren zur Gewinnung von Gallium aus wäßrigen alkalischen Lösungen durch Adsorption an mit Kelex® 100 getränkten perlpolymerisierten synthetischen Harzen und Elution des Galliums mit wäßrigen Säuren, dadurch gekennzeichnet, daß man als synthetische Harze makroporöses Polydivinylbenzol oder makroporöse Divinylbenzol-Copolymerisate verwendet, die durch Perlpolymerisation von Divinylbenzol oder mindestens 50 Gew.-% Divinylbenzol enthaltenden Gemischen aromatischer Mono-, Di- und/oder Trivinylbenzole in Gegenwart von Methyl-$C_2$-$C_6$-alkyl-ketonen erhalten wurden, diese speziellen Polymerisate mit 160-190 g Kelex® 100/l Harz (trocken) belädt und daß man nach der Elution des Galliums zunächst die Säure durch Waschen mit Wasser aus dem Harzbett verdrängt, dann das Harz mit wäßriger Natronlauge-Lösung wäscht und erst dann den nächsten Arbeitszyklus mit dem Beladungsschritt beginnt.

2. Verfahren nach Anspruch 1, dadurch gekennzeichnet, daß man die speziellen makroporösen Polymerisate mit 160-180 g Kelex® 100/l Harz (trocken) tränkt.

3. Verfahren nach Anspruch 1 oder 2, dadurch gekennzeichnet, daß man nach dem Eluieren des Galliums mit einer solchen Menge an Wasser nachwäscht, bis der pH-Wert im ablaufenden Waschwasser auf etwa 2 angestiegen ist und das Harzbett durch Behandeln mit 0,5-20 Bettvolumina 0,1 bis 5 gew.-%iger wäßriger Natronlauge reinigt.

4. Verfahren nach einem der Ansprüche 1 bis 3, dadurch gekennzeichnet, daß man als synthetische Harze makroporöses Polydivinylbenzol oder makroporöse Divinylbenzol-Copolymerisate verwendet, die durch Perlpolymerisation von Divinylbenzol oder mindestens 50 Gew.-% Divinylbenzol enthaltenden Gemischen aromatischer Mono-, Di- und/oder Trivinylbenzole in Gegenwart von Methylisobutylketon erhalten wurden.

5. Verfahren nach einem der Ansprüche 1 bis 3, dadurch gekennzeichnet, daß man als synthetische Harze makroporöse Divinylbenzol-Copolymerisate verwendet, die durch Perlpolymerisation von 60 bis 80 Gew.-% Divinylbenzol enthaltenden Gemischen aromatischer Mono-, Di-und/oder Trivinylbenzole in Gegenwart von Methylisobutylketon erhalten wurden.

## Claims

1. Process for recovering gallium from aqueous alkaline solutions by adsorption onto synthetic resins obtained by bead polymerisation and impregnated with Kelex® 100 and elution of the gallium with aqueous acids, characterised in that macroporous polydivinylbenzene or macroporous divinylbenzene copolymers which have been obtained by bead polymerisation of divinylbenzene or mixtures of aromatic mono-, di-and/or trivinylbenzenes containing at least 50 % by weight of divinylbenzene in the presence of methyl $C_2$-$C_6$-alkyl ketones are used as the synthetic resins and these specific polymers are charged with 160-190 g of Kelex® 100/l of resin (dry), and in that after elution of the gallium, the acid is first displaced from the resin bed by washing with water, the resin is then washed with aqueous sodium hydroxide solution and only then is the next operating cycle started with the charging step.

2. Process according to Claim 1, characterised in that the specific macroporous polymers are impregnated with 160-180 g of Kelex® 100/l of resin (dry).

3. Process according to Claim 1 or 2, characterised in that after elution of the gallium, the resin is rinsed with such an amount of water until the pH in the wash water discharged has risen to about 2 and the resin bed is purified by treatment with 0.5-20 bed volumes of 0.1 to 5 % strength by weight aqueous sodium hydroxide solution.

4. Process according to one of Claims 1 to 3, characterised in that macroporous polydivinylbenzene or macroporous divinylbenzene copolymers which have been obtained by bead polymerisation of divinylbenzene or mixtures of aromatic mono-, di- and/or trivinylbenzenes containing at least 50 % by weight of divinylbenzene in the presence of methyl isobutyl ketone are used as the synthetic resins.

5. Process according to one of Claims 1 to 3, characterised in that macroporous divinylbenzene copolymers which have been obtained by bead polymerisation of mixtures of aromatic mono-, di- and/or trivinylbenzenes containing 60 to 80 % by weight of divinylbenzene in the presence of methyl isobutyl ketone are used as the synthetic resins.

**Revendications**

1. Procédé de récupération de gallium de solutions aqueuses alcalines par adsorption sur des résines synthétiques polymérisées en suspension, imprégnées de Kelex® 100 et élution du gallium avec des acides aqueux, caractérisé en ce qu'on utilise comme résines synthétiques un polydivinylbenzène à pores macroscopiques ou des copolymérisats de divinylbenzène à pores macroscopiques, qui ont été obtenus par polymérisation en suspension de divinylbenzène ou de mélanges, contenant au moins 50 % en poids de divinylbenzène, de mono-, di- et/ou tri-vinylbenzènes aromatiques en présence de méthyl-(alkyle en $C_2$ à $C_6$)cétones, on charge sur ces polymérisats spéciaux 160 à 190 g de résine Kelex® 100/l (sur base sèche), et en ce qu'après l'élution du gallium, on déplace tout d'abord l'acide du lit de résine par lavage à l'eau, puis on lave la résine avec une solution aqueuse de lessive de soude et on entreprend après seulement le prochain cycle de travail comportant l'étape de charge.

2. Procédé suivant la revendication 1, caractérisé en ce que les polymérisats spéciaux à pores macroscopiques sont imprégnés de 160-180 g de résine Kelex® 100/l (sur base sèche).

3. Procédé suivant la revendication 1 ou 2, caractérisé en ce qu'après l'élution du gallium, on rince avec une quantité d'eau suffisante pour que la valeur du pH de l'eau de lavage qui s'écoule s'élève à 2 environ et on nettoie le lit de résine par traitement avec 0,5-20 volumes de lit de lessive de soude aqueuse à 0,1-5 % en poids.

4. Procédé suivant l'une des revendications 1 à 3, caractérisé en ce qu'on utilise comme résine synthétique un polydivinylbenzène à pores macroscopiques ou des copolymérisats de divinylbenzène à pores macroscopiques qui ont été obtenus par polymérisation en suspension de divinylbenzène ou de mélanges, contenant au moins 50 % en poids de divinylbenzène, de mono-, di- et/ou tri-vinylbenzènes aromatiques en présence de méthylisobutylcétone.

5. Procédé suivant l'une des revendications 1 à 3, caractérisé en ce qu'on utilise comme résines synthétiques des copolymérisats de divinylbenzène à pores macroscopiques qui ont été obtenus par polymérisation en suspension de mélanges, contenant 60 à 80 % en poids de divinylbenzène, de mono-, di- et/ou tri-vinylbenzènes aromatiques en présence de méthylisobutylcétone.